# EUROPEAN PATENT APPLICATION

(11) **EP 2 541 840 A2**
(43) Date of publication of application: **02.01.2013**
(21) Application number: 12174310.8
(22) Date of filing: 29.06.2012
(51) Int. Cl.: H04L 12/26

(54) **Link fault detection method and apparatus**

(30) Priority: 29.06.2011 CN 201110177575
(71) Applicant: Huawei Technologies Co., Ltd., Longgang District, Shenzhen Guangdong 518129 (CN)
(72) Inventor: Xu, Hongjun, 518129 Shenzhen (CN)
(74) Representative: Isarpatent

(57) **Abstract**

An embodiment of the present invention provides a link fault detection method, including: sending, by a detection initiating apparatus, a first detection packet to a first detection object; sending, by the detection initiating apparatus, a second detection packet to a second detection object, if a first response packet is not received within a preset time, where the first response packet corresponds to the first detection packet; and determining that a link fault is on the first detection object or between the first detection object and the second detection object, if a second response packet is received within a preset time, where the second response packet corresponds to the second detection packet. In addition, an embodiment of the present invention further provides a corresponding link fault detection apparatus. According to the link fault detection method and apparatus, it may be judged which specific segment a link fault exists in.

## Description

### FIELD OF THE INVENTION

The present invention relates to communications technologies, and in particular, to a link fault detection method and apparatus.

### BACKGROUND OF THE INVENTION

With the development of network technologies, link status detection means are widely used. Ping and Trace Route (Trace Route, Tracert) are typical link status detection means.

In addition, technologies relating to link status detection also include protection measures for link faults. Bidirectional forwarding detection (Bidirectional Forwarding Detection, BFD) is a typical protection measure for link faults. In BFD, a detection packet is periodically sent to detect a status of a link. If no detection packet is received within a certain time, the link is regarded to be faulty and a link protection operation is adopted.

The inventor finds that the prior art has the following technical problem:

In the prior art, that a fault exists on a link is judged only according to that no detection packet or response packet is received within a preset time, however, it cannot be judged which specific segment the link fault exists in.

### SUMMARY OF THE INVENTION

In one aspect, embodiments of the present invention provide a link fault detection method and apparatus, which may judge which specific segment a link fault exists in.

An embodiment of the present invention provides a link fault detection method, including:
sending, by a detection initiating apparatus, a first detection packet to a first detection object;
sending, by the detection initiating apparatus, a second detection packet to a second detection object, if a first response packet is not received within a preset time, where the first response packet corresponds to the first detection packet; and
determining that a link fault is on the first detection object or between the first detection object and the second detection object, if a second response packet is received within a preset time, where the second response packet corresponds to the second detection packet;
where the first detection object is a software module or a hardware module in a first embedded system, the second detection object is a software module or a hardware module in a second embedded system, and a path passed through by the first detection packet includes a path passed through by the second detection packet.

In another aspect, an embodiment of the present invention provides a link fault detection apparatus, including:
a first detection packet sending unit, configured to send a first detection packet to a first detection object;
a second detection packet sending unit, configured to send a second detection packet to a second detection object, if a first response packet is not received within a preset time, where the first response packet corresponds to the first detection packet; and
a link fault determining unit, configured to determine that a link fault is on the first detection object or between the first detection object and the second detection object, if a second response packet is received within a preset time, where the second response packet corresponds to the second detection packet;
where the first detection object is a software module or a hardware module in a first embedded system, the second detection object is a software module or a hardware module in a second embedded system, and a path passed through by the first detection packet includes a path passed through by the second detection packet.

It can be seen that, according to the link fault detection method and the link fault detection apparatus provided in the embodiments of the present invention, it may be judged which specific segment the link fault exists in.

### BRIEF DESCRIPTION OF THE DRAWINGS

To illustrate the technical solutions provided in embodiments of the present invention or in the prior art more clearly, accompanying drawings to be used for describing the embodiments of the present invention or the prior art are briefly introduced in the following. Apparently, the accompanying drawings in the following description are only some embodiments of the present invention, and persons of ordinary skill in the art may derive other drawings from these accompanying drawings without creative efforts.
FIG. 1 is a flowchart of a link fault detection method according to an embodiment of the present invention; and
FIG. 2 is a schematic diagram of a link fault detection apparatus according to an embodiment of the present invention.

### DETAILED DESCRIPTION OF THE EMBODIMENTS

To make objectives, technical solutions and beneficial effects of embodiments of the present invention clearer, the technical solutions the embodiments of the present invention are described clearly and completely with reference to accompanying drawings. Evidently, the embodiments are only some rather than all of the embodiments of the present invention. All other embodiments, which persons of ordinary skills in the art obtain based on the embodiments of the present invention without making creative efforts, fall within the protection scope of the present invention.

### Embodiment 1

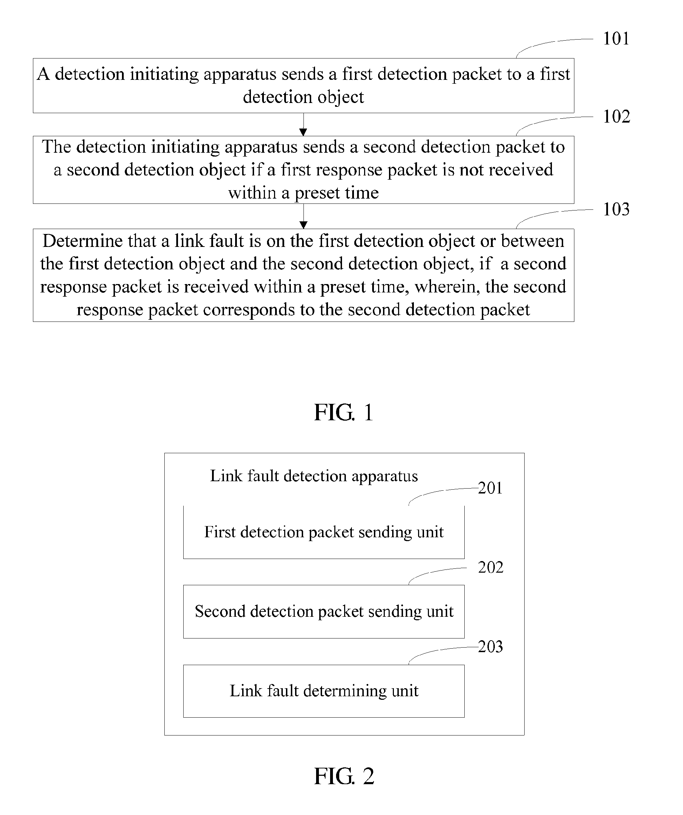

An embodiment of the present invention provides a link fault detection method. Referring to FIG. 1, FIG. 1 is a flowchart of a link fault detection method according to an embodiment of the present invention. The method includes:
101. A detection initiating apparatus sends a first detection packet to a first detection object.

In specific implementations of sending the first detection packet by the detection initiating apparatus, there may be a plurality of implementation manners, which are not specifically limited by the present invention. For example, the detection initiating apparatus may be a network device, such as a router or a switch, and specifically, may be a protocol module of the network device. The first detection packet may include an Internet Protocol (Internet Protocol, IP) address, and specifically, may be an IP address of an ingress interface of the first detection object or an IP address of an egress interface of the first detection object.
102. The detection initiating apparatus sends a second detection packet to a second detection object, if a first response packet is not received within a preset time, where the first response packet corresponds to the first detection packet.

In specific implementations of the first response packet, there may be a plurality of implementation manners, which are not specifically limited by the present invention. For example, the first detection object generates the first response packet after receiving the first detection packet. The first response packet may include an IP address of the detection initiating apparatus, which may specifically be an IP address of a protocol module of the detection initiating apparatus.

In specific implementations of sending the second detection packet by the detection initiating apparatus to the second detection object, there may be a plurality of implementation manners, which are not specifically limited by the present invention. Specific implementations of the second detection packet may be similar to that of the first detection packet, and for details, reference may be made to 101.
103: Determine that a link fault is on the first detection object or between the first detection object and the second detection object, if a second response packet is received within a preset time, where the second response packet corresponds to the second detection packet.

In specific implementations of the second response packet, there may be a plurality of implementation manners, which are not specifically limited by the present invention. Specific implementations of the second response packet may be similar to that of the first response packet, and for details, reference may be made to 102.

If a response of the second detection object is received, it may be determined that no link fault exists on the second detection object. Therefore, it may be determined that the link fault exists on the first detection object or between the first detection object and the second detection object.

The first detection object is a software module or a hardware module in a first embedded system, the second detection object is a software module or a hardware module in a second embedded system, and a path passed through by the first detection packet includes a path passed through by the second detection packet.

It can be seen that, according to the link fault detection method provided by one embodiment of the present invention, it may be judged which specific segment the link fault exists in.

Further, the detection initiating apparatus sends a third detection packet to a third detection object, if the second response packet is not received; where the path passed through by the second detection packet includes a path passed through by the third detection packet.

Further, the first embedded system and the second embedded system belong to a same network device.

An advantage of this solution is that a link fault inside the network device can be determined.

Further, the first embedded system and the second embedded system belong to different network devices.

An advantage of this solution is that a link fault between the network devices can be determined.

### Embodiment 2

An embodiment of the present invention also provides a link fault detection apparatus. The link fault detection apparatus may be implemented according to the link fault detection method provided in Embodiment 1. Referring to FIG. 2, FIG. 2 is a schematic diagram of a link fault detection apparatus according to an embodiment of the present invention. The link fault detection apparatus includes:

A first detection packet sending unit 201 is configured to send a first detection packet to a first detection object.

In specific implementations of sending the first detection packet by a detection initiating apparatus, there may be a plurality of implementation manners, which are not specifically limited by the present invention. For example, the detection initiating apparatus may be a network device, and specifically, may be a protocol module of the network device. The first detection packet may include an IP address, which may specifically be an IP address of an ingress interface of the first detection object or an IP address of an egress interface of the first detection object.

A second detection packet sending unit 202 is configured to send a second detection packet to a second detection object, if a first response packet is not received within a preset time, where the first response packet corresponds to the first detection packet.

In specific implementations of the first response packet, there may be a plurality of implementation manners, which are not specifically limited by the present invention. For example, the first detection object generates the first response packet after receiving the first detection packet. The first response packet may include an IP address of the detection initiating apparatus, which may specifically be an IP address of a protocol module of the detection initiating apparatus.

In specific implementations of sending the second detection packet by the detection initiating apparatus to the second detection object, there may be a plurality of implementation manners, which are not specifically limited by the present invention. Specific implementations of the second detection packet may be similar to that of the first detection packet, and for details, reference may be made to 201.

A link fault determining unit 203 is configured to determine that a link fault is on the first detection object or between the first detection object and the second detection object, if a second response packet is received within a preset time, where the second response packet corresponds to the second detection packet.

In specific implementations of the second response packet, there may be a plurality of implementation manners, which are not specifically limited by the present invention. Specific implementations of the second response packet may be similar to that of the first response packet, for details, reference may be made to 202.

If a response of the second detection object is received, it may be determined that no link fault exists on the second detection object. Therefore, it may be determined that the link fault exists on the first detection object or between the first detection object and the second detection object.

The first detection object is a software module or a hardware module in a first embedded system, the second detection object is a software module or a hardware module in a second embedded system, and a path passed through by the first detection packet includes a path passed through by the second detection packet.

It can be seen, according to the link fault detection apparatus provided by one embodiment of the present invention, it may be judged which specific segment the link fault exists in.

Further, the apparatus includes:
a third detection packet sending unit, configured to send a third detection packet to a third detection object, if the second response packet is not received, where the path passed through by the second detection packet includes a path passed through by the third detection packet.

Further, the software module in the first embedded system or the software module in the second embedded system is a platform module, a driver module, an adapter module or a protocol module.

Persons of ordinary skills in the art can understand that all or part of steps in the foregoing method embodiments may be implemented by a program instructing relevant hardware. The program may be stored in a computer readable storage medium. When the programs are executed, the steps of the foregoing method embodiments are performed. The storage medium includes various media capable of storing program codes, such as a ROM, a RAM, a magnetic disk or an optical disk.

Finally, it should be noted that the foregoing embodiments are merely provided for describing the technical solutions of the present invention, but not intended to limit the present invention. Although the present invention has been illustrated in detail with reference to the embodiments, persons of ordinary skill in the art should understand that, they still can make modifications to the technical solutions recorded in the foregoing embodiments, or make equivalent replacements to some technical features in the technical solutions, and such modifications or replacements do not cause the essence of corresponding technical solutions to depart from the scope of the present invention.

## Claims

1. A link fault detection method, **characterized in that**, the method comprising:
sending, by a detection initiating apparatus, a first detection packet to a first detection object;
sending, by the detection initiating apparatus, a second detection packet to a second detection object, if a first response packet is not received within a preset time, wherein the first response packet corresponds to the first detection packet; and
determining that a link fault is on the first detection object or between the first detection object and the second detection object, if a second response packet is received within a preset time, wherein the second response packet corresponds to the second detection packet;
wherein, the first detection object is a software module or a hardware module in a first embedded system, the second detection object is a software module or a hardware module in a second embedded system, and a path passed through by the first detection packet comprises a path passed through by the second detection packet.

2. The method according to claim 1, **characterized in that**, the method further comprising:
sending, by the detection initiating apparatus, a third detection packet, if the second response packet is not received; wherein, the path passed through by the second detection packet comprises a path passed through by the third detection packet.

3. The method according to claim 1, **characterized in that**, the first embedded system and the second embedded system belong to a same network device.

4. The method according to claim 1, **characterized in that**, the first embedded system and the second embedded system belong to different network devices.

5. The method according to claim 1, **characterized in that**, the software module in the first embedded system or the software module in the second embedded system is a platform module, a driver module, an adapter module or a protocol module.

6. A link fault detection apparatus, **characterized in that**, the apparatus comprising:
a first detection packet sending unit, configured to send a first detection packet to a first detection object;
a second detection packet sending unit, configured to send a second detection packet to a second detection object, if a first response packet is not received within a preset time, wherein the first response packet corresponds to the first detection packet; and
a link fault determining unit, configured to determine that a link fault is on the first detection object or between the first detection object and the second detection object, if a second response packet is received within a preset time, wherein the second response packet corresponds to the second detection packet;
wherein, the first detection object is a software module or a hardware module in a first embedded system, the second detection object is a software module or a hardware module in a second embedded system, and a path passed through by the first detection packet comprises a path passed through by the second detection packet.

7. The apparatus according to claim 6, **characterized in that**, the apparatus further comprising:
a third detection packet sending unit, configured to send a third detection packet to a third detection object, if the second response packet is not received, wherein the path passed through by the second detection packet comprises a path passed through by the third detection packet.

8. The apparatus according to claim 6, **characterized in that**, the software module in the first embedded system or the software module in the second embedded system is a platform module, a driver module, an adapter module or a protocol module.
